(19) Europäisches Patentamt
European Patent Office
Office européen des brevets

(11) EP 3 511 272 A1

(12) EUROPEAN PATENT APPLICATION

(43) Date of publication:
17.07.2019 Bulletin 2019/29

(51) Int Cl.:
B65G 43/02 (2006.01)          B65G 1/06 (2006.01)
G05B 19/19 (2006.01)          G05B 19/404 (2006.01)

(21) Application number: 18151762.4

(22) Date of filing: 16.01.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(71) Applicant: Logevo AB
34324 Älmhult (SE)

(72) Inventor: MÅNSSON, Henrik
22352 Lund (SE)

(74) Representative: Hansson Thyresson AB
PO Box 73
201 20 Malmö (SE)

(54) **A POSITIONING DETERMINING DEVICE AND A METHOD FOR DETERMINING POSITION OF A GATE**

(57) A position determining device (11) for use in a multi-storey goods storage arrangement (10) comprising a plurality of levels of rows (12) arranged in parallel and comprising two transport rails extending in parallel along the row, and aisles (18; 19) extending in parallel between opposing ends of sets of said rows (12), wherein at least one measuring cart (28) is operable along each supply aisle (18) and supporting said position determining device (11), said measuring cart (20; 28). It comprises a receiver (39) arranged for receiving control signals from a central unit (42), a transmitter (41) arranged for sending position data to said central station (42), and a motor (38) operable to move said measuring cart along said supply aisle to assumed positions of gates of rows, wherein said position determining device is arranged to determine actual position of a gate of a row, and to send data corresponding to said actual position of a gate of a row to said central station (42).

Fig. 7

## Description

TECHNICAL FIELD

A position determining device for use in a multi-storey goods storage arrangement comprising a plurality of levels of rows arranged in parallel and comprising two transport rails extending in parallel along the row, and supply aisles extending in parallel between opposing ends of sets of said rows.

PRIOR ART

Multi-storey goods storage arrangements or pallet racks are used in a wide area of applications, such as conventional warehouses, storages and stores. WO2011119083 discloses a three-dimensional goods storage arrangement which comprises a system of beams with a number of levels and, arranged in these and extending in two main directions, passages/channels for goods. A lift is included together with transport elements and is controlled by control elements and sensors. The elements comprise means for automated transfer of goods. Each level or section thereof comprises a passage or channel extending in the first main direction. A carriage can be driven so as to be able to position the carriage in line with a number of second passages or channels, which are located alongside one another and which extend in the second main direction. A satellite can be driven onto or off of the carriage at the respective second passage or channel.

SUMMARY OF THE INVENTION

An object of the present invention is to determine the position of gates to rows in a multi-storey goods storage arrangement in an efficient and accurate process. The rows of the multi-storey goods storage arrangement have an entrance or gate facing supply or picker aisles. In accordance with the invention, a cart is moved to a first set of positions of gates. The first set of positions of gates is based on basic configuration data from the specification of the racking. When the cart is in a measuring position corresponding to a position comprised in said first set of positions of gates a verification and correction process is initiated. Data including basic configuration data are stored in a database in a memory of a central unit.

In various embodiments, the cart is provided with a set of laser detectors directing beams of laser signals in a direction toward the gate and the row. At least one vertical laser detector is attached to the cart in a position where the laser beam of the vertical laser detector is directed to a vertical section of a transport rail of the row. A detection unit operatively connected to the at least one vertical laser detector detects the position of said vertical section in a horizontal plane and compares it with a corresponding position previously stored as part of the basic configuration data. In various embodiments, a laser detector is attached close to an end of a cart rail of the cart.

If the position of the vertical section of the transport rail in the measuring position is within a first interval from the stored position no correction is made. However, should the measuring position differ from the position in the database of the central unit the cart is moved a horizontal distance corresponding to the difference between the detected position and the stored position to a new position. In the new position the position of said vertical section in a horizontal plane is again determined. If the measuring position still is not in line with the gate a further correction process is performed. Normally, the new position will be within a predetermined interval and no further correction is necessary. Data of the new position then is used to update the stored position for future use.

In various embodiments, the cart is provided with an elevator device, so as to be able to access at least two vertically displaced rows. In such embodiments, a similar correction process is made with reference to the vertical position of the cart. At least one horizontal laser detector is attached to the cart in a position where the laser beam of the horizontal laser detector is directed to a horizontal section of a transport rail of the row. The detection unit operatively connected to the at least one horizontal laser detector detects the position of said horizontal section in a vertical plane and compares it with a corresponding position previously stored as part of the basic configuration data. In various embodiments, the least one horizontal laser detector is attached close to an end of the cart rail of the cart.

If the position of the horizontal section of the transport rail in the measuring position is within a first interval from the stored position no correction is made. However, should the measuring position differ from the position in the database of the central unit the cart is moved a vertical distance corresponding to the difference between the measured position and the stored position to a new position. In the new position the position of said horizontal section in a vertical plane is again determined. If the measured position still is not in line with the gate, a further correction process is performed. Normally, the new position will be within a predetermined interval and no further correction is necessary. Data of the new position then is used to update the stored position for future use.

The verification and correction process is made faster using two horizontal and two vertical laser detectors on either side of the cart because a complete gate with both transport rails in a row can be measured simultaneously. Since the cart is placed between two opposite gates in the measuring position the positions of both opposite gates can be verified with less movements, should laser detectors on opposite sides of the cart be provided. In such embodiments, altogether eight laser detectors are used.

BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:

Fig. 1    is a schematic partial top view of one level of a first embodiment of a multi-storey goods storage arrangement,

Fig. 2    is a schematic side view of an embodiment of a picking aisle in a four-level multi-storey goods storage arrangement,

Fig. 3    is a schematic side view of a picker transfer cart,

Fig. 4    is a schematic top view of the picker transfer cart shown in Fig. 3 with an enlarged section showing one embodiment of a position determining device,

Fig. 5    is a schematic partial perspective view of the position determining device shown in Fig. 4,

Fig. 6    is a schematic partial top view of a transfer cart supporting one embodiment of a position determining device on a picker transfer cart,

Fig. 7    is a schematic partial perspective view of the position determining device shown in Fig. 6, and

Fig. 8    is a schematic partial top view of position determining setup.

DETAILED DESCRIPTION

Multi-storey goods storage arrangements comprise a racking of uprights, beams cross braces and similar mechanical components. Shuttles and pickers are supported and transported on transfer carts along supply aisles. The shuttles and pickers are arranged to move away from a transfer cart or a picker transfer cart into the rows to leave goods or to pick up goods stored therein. Data related to most dimensions and positions of the racking are very carefully specified and stored in a computer based system. Carts, shuttles and pickers run on rails in supply and picker aisles and rows, respectively.

The pickers can be provided with a cable winder. The cable of the cable winder is electrically connected to a power outlet on said picker transfer cart for providing electric power to the lifting yoke and to said locking device. Also compressed air and control signals can be transferred through the cable or cables. The length of the cable extends the length of a row and also the distance from a top level of the multi-storey goods storage arrangement the level where the conveyor is arranged. Thus, the lifting yoke is provided with electric power and control signals during operation.

At least one picker transfer cart normally is operating along each picking aisle at each or every second level and each picker transfer cart supports a picker. The pickers are suspended from the picker transfer carts supported on cart rails arranged in the picker transfer carts and are operable from the picker transfer carts into the rows. In the rows, the picker moves on transport rails. The pickers are provided with means for picking up goods stored on pallets, baseboards or other types of supports. After returning to the picker transfer cart and positioning the picker transfer cart above a conveyor the goods is lowered and placed on a conveyor.

The means for picking up goods comprises lifting means and a hoist. In various embodiments the means for picking up goods comprises a lifting yoke with a suction device. The picker cat comprises a locking device. The locking device will ensure that goods will remain in position on the picker, should the suction device be faulty.

Pickers normally are supported on a top rail arrangement on said picker transfer cart and are moveable out from said picker transfer cart into a rail arrangement in said rows. There is a small gap present between the rail arrangement of the transfer cart and the corresponding rail arrangement in the rows. The rail arrangement of the row comprises transport rails where the pickers and shuttles are supported during transport in the rows.

All rows have an entrance or gate facing supply or picker aisles. The position of a gate, specifically the positions of the rails where the shuttle or picker will run, is specified and stored together with other data of the racking. A specified and previously known position of a gate is used for positioning a transfer cart to allow a shuttle or picker to enter or leave the row. It is essential that the stored positions of gates of rows are very accurate, so as to prevent situations where a cart or shuttle moving to or from a row fails to move from or to a cart. Even a small disparity in stored and actual position may lead to dramatic and dangerous situations and accidents. It would be desirable to determine accurately the position of gates in a multi-storey goods storage arrangement.

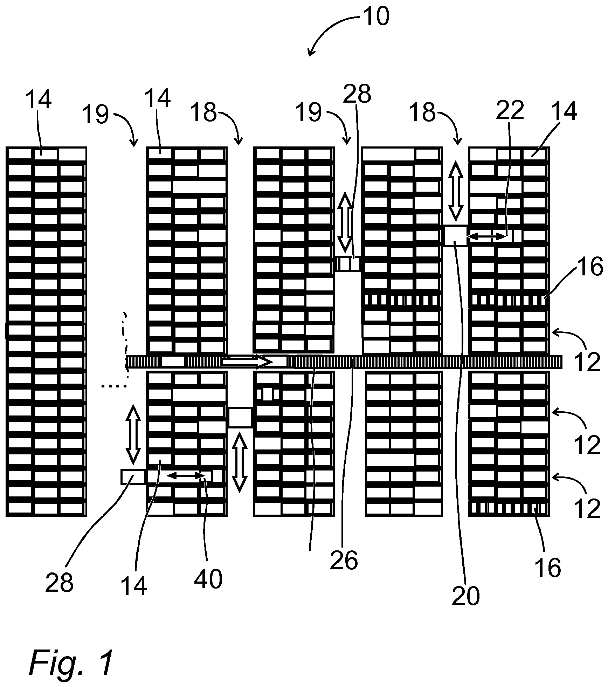

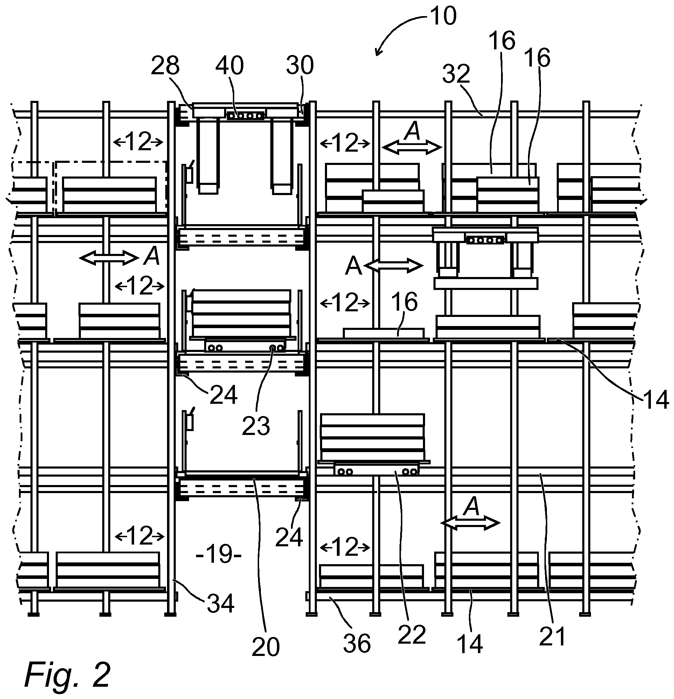

In the embodiment shown in Fig. 1 and Fig. 2 a multi-storey goods storage arrangement or pallet racking 10 comprises a plurality of levels of rows 12 in which pallets 14 with packages 16 are stored. The rows 12 extend in two opposite directions from transport lines 18 extending between opposite ends of said rows 12, said transport lines 18 also having a plurality of levels. Baseboard transfer carts 20 supporting a shuttle 22 operate in said transport lines 18 in a direction perpendicular to the rows 12. The shuttle 22 is supported in a conventional way on shuttle wheels 23 on a rail system in a lower section of the baseboard transfer cart 20. A corresponding rail system with transport rails 21 extends along said rows 12 to allow said shuttle 22 to transport pallets 14 to and from selected positions along said rows 12.

The rail system in said rows also supports baseboards or pallets 14 on which packages 16 are stored. In various embodiments, each baseboard 14 in one storage line 12 supports one type of articles or packages. Packages are received to and delivered from the multi-storey goods storage arrangement through different means.

Each shuttle 22 is arranged to move away from the transfer cart 20 into said rows 12 carrying packages 16 on baseboards 14. The baseboards 14 can be transported along a storage line 12 to be placed at a selected position in the storage line 12. The baseboards 14 also can be picked up at a selected position by the shuttle 22 and transported to the transfer cart 20 which then will transport the picked-up pallet along the transport line to a selected new storage line.

The multi-storey goods storage arrangement basically is a pallet racking with a plurality of uprights 34 and horizontal load beams 36. The load beams 36 can be designed as or include said rail system for supporting the shuttle 22. Conventional diagonal braces and horizontal braces can also be used.

The shuttle 22 moves from the transfer cart 20 into the rows 12 and back carrying pallets or baseboards 14 with or without packages 16. The shuttle 22 is provided with support means that can be raised in position under a baseboard 14 and kept in a raised position during transport in the storage line 12. When packages have reached an intended position in the storage line or elsewhere the support means is lowered and the packages will rest on rails or load beams 36 or on the baseboard transfer cart 20.

The multi-storey goods storage arrangement shown in Fig. 1 and Fig. 2 comprises also picking aisles 19 in which picker transfer carts 28 operate. The picking aisles 19 extend parallel to the transport aisles 18 and are normally arranged between transport aisles 18 forming an arrangement with alternating transport aisles 18 and picking aisles 19. Picker transfer carts 28 operate back and forth in each picking aisle 19 running on rails 24. Each picker transfer cart 28 supports a picker cart 40 suspended from a top cart rail arrangement 30 and movable into and out of a transport rail arrangement 32 in the rows 12 as indicated by arrow A.

In each transport aisle 18 at least one baseboard transfer cart 20 operates to transport baseboards 14 with packages 16 using shuttles 22 to selected positions in the rows 12. In each picking aisle 19 at least one picker transfer cart 28 is arranged to pick up packages 16 in the rows 12 using a picker cart 40. The shuttles 22 and the picker carts 40 have an operation distance corresponding the length of a storage line 12 between a transport aisle 18 and a picking aisle 19. All baseboards 14 and packages 16, respectively, in each storage line thus can be reached and positioned correctly. Goods picked from rows 12 can be put on conveyors 26. In various embodiments, picking aisles 19 are combined with supply or transport aisles 18.

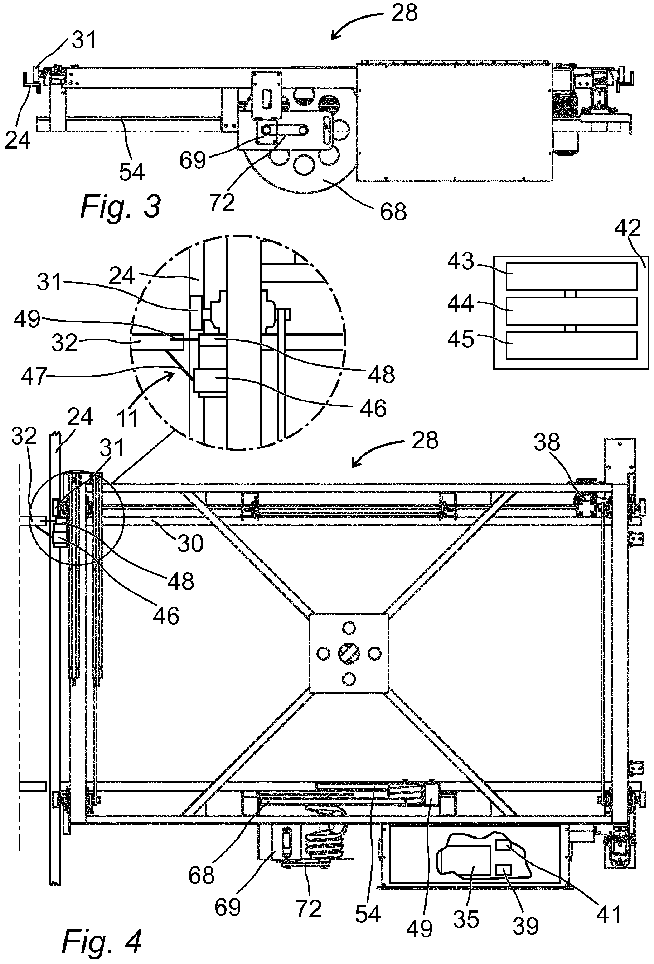

In the embodiment of a rectangular picker transfer cart 28 shown in Fig. 3 and Fig. 4 cart wheels 31 are arranged in each corner. The cart wheels run on rails 24 extending along a picking aisle 19 and are driven by a motor 38. Electrical power, compressed air and control signals are provided from the picker transfer cart 28 to a picker cart through a control cable 54. The control cable 54 is wound up on a cable winder 68 which is driven by a cable motor 69 through a chain 72. The length of the control cable 54 corresponds to or extends the length of a storage line, so as to allow full operation of the picker cart 40 along the full length of a storage line. The control cable 54 is formed as a chain and may comprise pipes, fibres and different types of electrical cables. The cable motor 69 has a defined moment to ensure that the control cable 54 is properly stretched and that the picker cart 40 does not spin. The cable motor 69 is provided with a pulse transducer which is used to determine the movement and position of the picker cart 40.

The baseboard transfer cart 20, picker transfer carts 28 and the picker carts 40 are provided with a control unit 35, a receiver 39 and a transmitter 41 communicating with a central unit 42. The control unit 35 receives control signals from the central unit 42 and then controls the movement and operations of the cart on the basis of the control signals. The central unit 42 comprises a processing unit 43, a communication device 44 and memory means 45. The power lines in the rails 24 can be used for communication between the central unit 42 and the baseboard transfer carts 20 and the picker transfer carts 28, respectively. Stationary data, such as dimensions, distances and performance of the multi-storey goods storage arrangement, carts and other units are stored in a database in the memory means 45.

Dynamic data relating to location and size of specific packages or goods, baseboard, speed of conveyors etc. are continuously updated through the communication device 44 from and to carts and from a plurality of sensors and gauges arranged throughout the multi-storey goods storage arrangement. A control software running in the central unit continuously monitors and controls the function of the multi-storey goods storage arrangement. Information relating to different patterns or sets of packages is also stored and handled with the control software. As a result, any picked package can be positioned and monitored throughout the handling thereof within and out of the multi-storey goods storage arrangement.

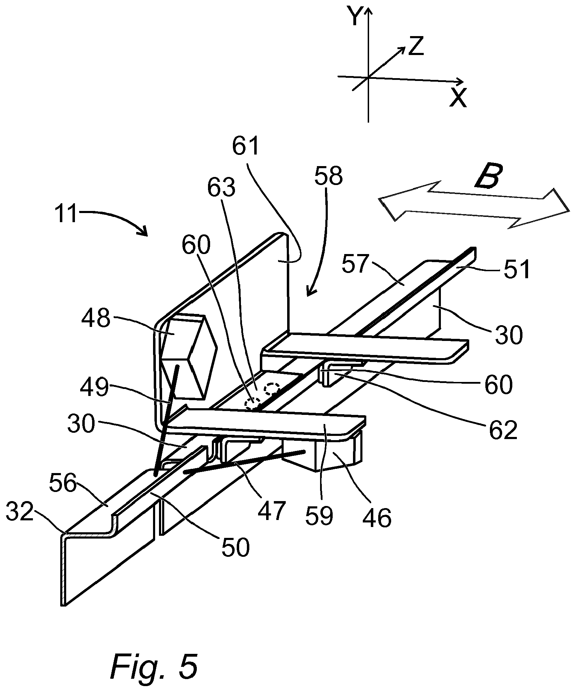

A positioning determining device 11 comprises at least one laser detector. In the embodiment shown in Fig. 3 to Fig. 5, the positioning determining device 11 comprises control unit 35, receiver 39 and transmitter 41 for communicating with the central unit 42. It also comprises a first vertical laser detector 46 and a first horizontal laser detector 48. First vertical laser detector 46 emits a first laser beam 47, and first horizontal laser detector 48 emits a second laser beam 49. First laser beam 47 is directed in an oblique angle to a vertical section 50 of said transport rail 32, said vertical section 50 of the transport rail 32 extending in a plane parallel to a vertical section 51 of said cart rail 30. The positioning determining device 11 can be mounted on a specifically designed measuring cart used for the position determining process or on a transfer cart. In the embodiment shown in Fig. 5, the first horizontal laser detector 48 directs second laser beam 49 towards a horizontal section 56 of transport rail 32. The horizontal section 56 of transport rail 32 extends in a plane parallel to a horizontal section 57 of said cart rail 30.

First vertical laser detector 46 is attached to a first horizontal section 59 of an L-shaped support element 58. First horizontal laser detector 48 is attached to a vertical section 61 of the L-shaped support element 58. L-shaped support element 58 is attached to the measuring or transfer cart. Where a transfer cart is used for the positioning determining process, L-shaped support element 58 preferably is removably attached to the transfer cart. In various embodiments, a plurality of magnets 60 are used to removably attach the L-shaped support element 58 to the cart rail. As shown in Fig. 5, magnets 60 are attached to a second horizontal section 63 of the L-shaped support element 58 as well as on brackets 62 attached to an underside of the horizontal section 59 of the L-shaped support element 58. Magnets 60 are attached to the horizontal section 57 of cart rail 30 and to vertical section 51 of cart rail 30. In position the L-shaped support element 58 engages two perpendicular sections of the cart rail 30 through magnets 60. As a result, L-shaped support element 58 is securely fixed in position.

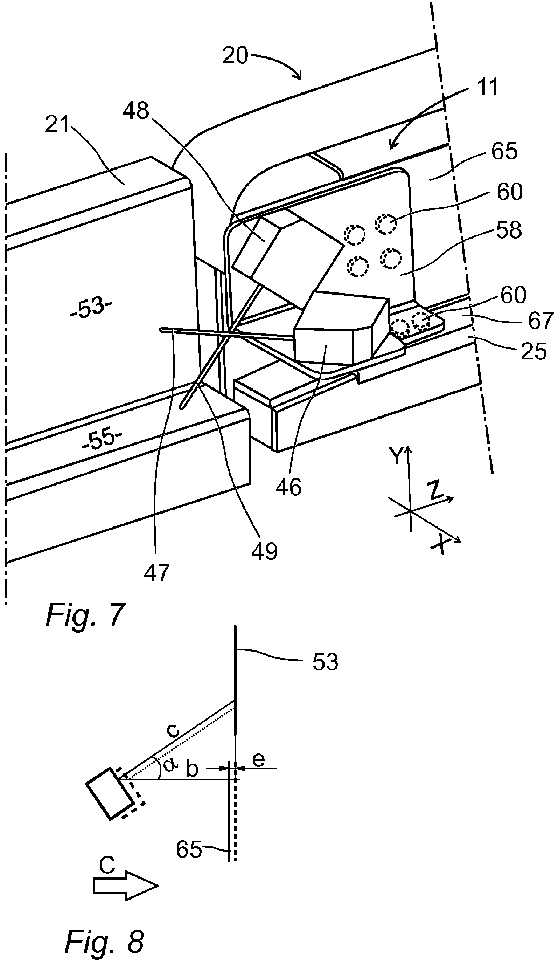

In various embodiments, first vertical laser detector 46 and first horizontal laser detector 48 comprise communication means. The communication means communicates with the control unit 35 on the transfer or measuring cart 28 to transfer position data and for power supply. In various embodiments, laser detector is of type OMRON ZX1-LD100A81. It has a measuring area of 100 mm +- 35 mm. Thus, the distance between the laser detector and the surface where the laser beam will be reflected on can be between 65 mm and 135 mm. The positioning determining process corrects a previously stored position first in X direction, also indicated by arrow B in Fig. 5, and possibly also in Y direction. The positioning determining process will be further described below with reference to Fig. 8.

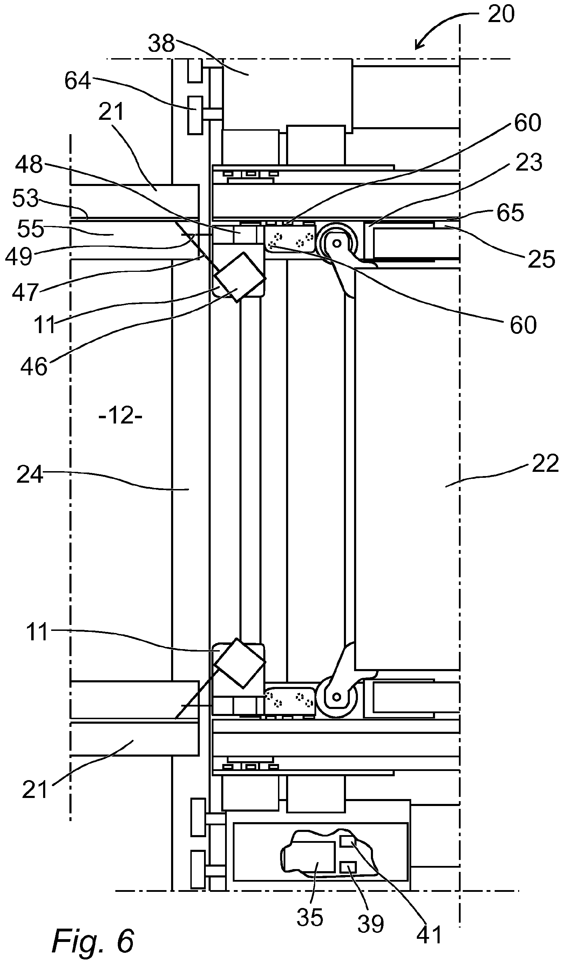

In the embodiment shown in Fig. 6 and Fig. 7, a positioning determining device 11 is attached to two opposite sides of a transfer cart 20. In the position shown in Fig. 6 and Fig. 7, the transfer cart 20 is right in front of a gate in a row 12. The transfer cart 20 supports a shuttle 22 on shuttle wheels 23 on shuttle cart rails 25. When in a correct position at a gate the shuttle cart rails 25 are aligned with transport rails 21 in the row 12. First vertical laser detector 46 is arranged to direct a first laser beam 47 towards a vertical section 53 of transport rail 21. First horizontal laser detector 48 is arranged to direct a second laser beam 49 towards a horizontal section 55 of transport rail 21.

The positioning determining device 11 is attached through magnets 60 to a vertical section 65 of transfer cart rail 25 and to a horizontal section 67 of transfer cart rail 25. Transfer cart 20 runs on transfer cart wheels 64 supported on rails 24 and is driven by motor 38. Magnets 60 are distributed to provide a firm attachment the L-shaped support element 58 of positioning determining device 11 to the transfer cart rail 25. First vertical laser detector 46 and first horizontal laser detector 48 are provided with communication means. The baseboard transfer cart 20 is provided with control unit 35, receiver 39 and transmitter 41 communicating with central unit 42.

The positioning determining process normally is initiated manually. The central unit 42 sends instructions to the measuring cart or a transfer cart 20, 28 to run the process at a specific location, or gate, in accordance with previously stored first position data. The measuring cart moves to the specified assumed position, such as a position shown in Fig. 4 to Fig. 8. Control unit 35 supplies power to first vertical laser detector 46 which then directs a first laser beam 47 towards vertical section 50 of transport rail 21, 32 at a predetermined angle $\alpha$. First vertical laser detector 46 determines a first measured distance c as shown in Fig. 8 and sends information corresponding to distance c to control unit 35. Distance b between first vertical laser detector 46 and vertical section 65 of transfer cart rail is previously known and determined by the attachment of the positioning determining device 11 on the measuring cart.

Control unit 35 calculates distance b+e using the formula

$$b+e = c * \cos \alpha$$

If b+e = b the previously stored first position data of the gate is equal to a second position data of the real position where the measuring cart is positioned. In this case corresponding information is sent from the transmitter 41 to control unit 35 and no correction of the stored position in the memory means 45 is made. Equal positions should be understood as first position data within an interval from second position data, said interval being for instance $\pm 5$ mm. In various embodiments, angle $\alpha$ is 40 degrees for a transfer cart and 45 degrees for a picker transfer cart.

However, should b + e not be equal to b, that is there is an error e in the assumed and previously stored position data, measuring cart will be instructed to move a distance corresponding to the error e to a corrected position. In the setup shown in Fig. 8 this means that the measuring cart is moved in the direction of arrow C. This is indicated by dashed lines in Fig. 8. The position is corrected with reference to both rails of the transport rail 21 using a mean value of the errors on the two sides. In the corrected position, the positioning determining process as set out above is repeated. Normally, a second positioning determining process will result in a full alignment of vertical sections of cart rail and transport rail corresponding to a position of the measuring cart right in front of the gate. If this is the case, information corresponding to error e is sent from the measuring cart to the central unit and the assumed and previously stored position data is updated. Further positioning determining processes can be initiated if necessary.

When the position of the gate is determined and possibly corrected in X direction the position of the gate in Y direction can be determined in a similar way. In this process first horizontal laser detector 48 is used to determine a vertical position of transport rails in the rows. An error in Y direction can be used to update the gate position Y direction, should a cart with an elevator function be used. Measured errors in X direction as well as in Y direction can also be used in a general verification process of the structure and the dimensions of the racking.

Normally, each entrance or gate position of the complete multi-storey goods storage arrangement is verified in accordance with the process described above. When one gate position is verified and update information has been uploaded to the central unit 42 an order is sent from the central unit to the measuring cart to move to a new position and to perform the position verification process.

While certain illustrative embodiments of the invention have been described in particularity, it will be understood that various other modifications will be readily apparent to those skilled in the art without departing from the inventive concept. Accordingly, it is not intended that the scope of the claims appended hereto be limited to the description set forth herein but rather that the claims be construed as encompassing all equivalents of the present invention which are apparent to those skilled in the art to which the invention pertains.

**Claims**

1. A position determining device (11) for use in a multi-storey goods storage arrangement (10) comprising a plurality of levels of rows (12) arranged in parallel and comprising two transport rails extending in parallel along the row, and aisles (18; 19) extending in parallel between opposing ends of sets of said rows (12), wherein at least one measuring cart (28) is operable along each supply aisle (18) and supporting said position determining device (11), said measuring cart (20; 28) comprising
a receiver (39) arranged for receiving control signals from a central unit (42),
a transmitter (41) arranged for sending position data to said central station (42),

a motor (38) operable to move said measuring cart along said supply aisle to assumed positions of gates of rows, wherein said position determining device (11) is arranged to determine actual position of a gate of a row, and to send data corresponding to said actual position of a gate of a row to update information stored in said central station (42).

2. The position determining device (11) in accordance with claim 1, comprising distance measuring means arranged to measure a first distance to at least one transport rail (21; 32) of said row (12) and to determine said actual position on the basis of said first distance.

3. The position determining device (11) in accordance with claim 1, wherein said measuring cart (20; 28) is a transfer cart.

4. The position determining device (11) in accordance with claim 3, comprising an attachment arrangement for releasably attaching said position determining device on said transfer cart (20; 28).

5. The position determining device (11) in accordance with claim 4, wherein said transfer cart (20; 28) comprises
at least one cart rail (25; 30) extending in parallel and perpendicular to the aisle (18; 19), and
at least a first vertical laser detector (46) fixedly attached to a support element (58), wherein said support element (58) is arranged to be releasably attached to at least a horizontal section (57; 67) of said cart rail (25; 30) of said transfer cart (20; 28), and wherein said at least a first vertical laser detector (46) is positioned on the support element (58) to direct a laser beam in an oblique angle to a vertical section (50; 53) of said transport rail (21; 32), said vertical section (50; 53) of the transport rail (21; 32) extending in a plane parallel to a vertical section (61; 65) of said cart rail (25; 30).

6. The position determining device in accordance with claim 5, wherein said attachment arrangement comprising magnets (60) attached to said horizontal section (57; 67) of said cart rail (25; 30) and to vertical section (61; 65) of said cart rail (25; 30) of said transfer cart (20; 28).

7. The position determining device in accordance with claim 5, comprising

at least a first horizontal laser detector (48) fixedly attached to support element (58), wherein said at least a first horizontal laser detector (48) is positioned on the support element (58) to direct a laser beam in an oblique angle to a horizontal section (55; 56) of said transport rail (21;

32), said horizontal section (55; 56) of the transport rail (21; 32) extending in a plane parallel to a horizontal section of said cart rail (25; 30).

8. A method for determining position of a gate to a row (12) in a multi-storey goods storage arrangement (10) comprising a plurality of levels of rows (12) arranged in parallel and comprising two transport rails (21; 32) extending in parallel along the row (12), and aisles (18; 19) extending in parallel between opposing ends of sets of said rows (12), wherein at least one measuring cart (20; 28) is operable along each aisle (18; 19), said method comprising

   sending control signals from a central unit (42) to said measuring cart (20; 28) to move to an assumed position corresponding to an entrance, directing position sensing signals from said transfer cart (20; 28) towards at least one measuring position of said gate of a row (12), sensing a first position of said gate, sending sensed position from said measuring cart (20; 28) to said central unit (42) for updating position of said gate.

9. The method in accordance with claim 8, wherein sensing the first position of said gate is made by at least a first vertical laser detector (46) arranged on a position determining device (11).

10. The method in accordance with claim 9, comprising releasably attaching said position determining device (11) on said transfer cart (20; 28).

11. The method in accordance with claim 8, comprising measuring a distance from said transfer cart (20;28) to a vertical section (50; 53) of said transport rail (21; 32), said vertical section (50; 53) of the transport rail (21; 32) extending in a plane parallel to a vertical section (61; 65) of said cart rail (25; 30).

12. The method in accordance with claim 11, comprising directing a laser beam in an oblique angle to vertical section (50; 53) of said transport rail (21; 32).

13. The method in accordance with claim 11, comprising directing a laser beam in an oblique angle of between 40 degrees and 45 degrees to vertical section (50; 53) of said transport rail (21; 32).

Fig. 1

**Fig. 2**

Fig. 3

Fig. 4

Fig. 5

*Fig. 6*

*Fig. 7*

*Fig. 8*

Europäisches
Patentamt

European
Patent Office

Office européen
des brevets

# EUROPEAN SEARCH REPORT

**Application Number**

EP 18 15 1762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/009193 A1 (HILL JAYSON [US]) 11 January 2018 (2018-01-11) * claim 1 * * figures 1-10 * * paragraph [0004] - paragraph [0013] * * paragraph [0023] - paragraph [0050] * ----- | 1-7 | INV. B65G43/02 B65G1/06 G05B19/19 G05B19/404 |
| X | US 5 699 281 A (CRUCIUS WESLEY [US] ET AL) 16 December 1997 (1997-12-16) * claim 1 * * figures 1-4 * * column 1, line 6 - column 3, line 23 * * column 3, line 65 - column 9, line 9 * ----- | 1-5,8-11 | |
| Y | | 12,13 | |
| X | JP 2017 030945 A (MURATA MACHINERY LTD) 9 February 2017 (2017-02-09) * claim 1 * * figures 1-9 * * paragraph [0001] - paragraph [0014] * * paragraph [0016] - paragraph [0033] * ----- | 1-5,8-13 | |
| Y | US 9 008 884 B2 (TOEBES STEPHEN) 14 April 2015 (2015-04-14) * claim 1 * * figures 5-9 * * column 7, line 17 - column 10, line 51 * ----- | 12,13 | TECHNICAL FIELDS SEARCHED (IPC) B65G G05B F16B G01C |
| A | US 2017/101264 A1 (BRUMM CHRISTOPHER [US] ET AL) 13 April 2017 (2017-04-13) * claim 1 * * figures 1-10 * * paragraph [0002] * * paragraph [0007] - paragraph [0017] * * paragraph [0032] - paragraph [0081] * ----- | 1-13 | |

The present search report has been drawn up for all claims

| Place of search | Date of completion of the search | Examiner |
|---|---|---|
| The Hague | 3 July 2018 | Thibaut, Charles |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 1762

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2018

| Patent document cited in search report | | Publication date | Patent family member(s) | | Publication date |
|---|---|---|---|---|---|
| WO 2018009193 | A1 | 11-01-2018 | NONE | | |
| US 5699281 | A | 16-12-1997 | NONE | | |
| JP 2017030945 | A | 09-02-2017 | NONE | | |
| US 9008884 | B2 | 14-04-2015 | US 2012189410 A1 | | 26-07-2012 |
| | | | US 2015239666 A1 | | 27-08-2015 |
| | | | US 2016221755 A1 | | 04-08-2016 |
| US 2017101264 | A1 | 13-04-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011119083 A